Europäisches Patentamt

**European Patent Office**

**Office européen des brevets**

(19)

(11) Publication number: **0 127 939**
**A2**

(12) **EUROPEAN PATENT APPLICATION**

(21) Application number: **84302820.0**

(22) Date of filing: **26.04.84**

(51) Int. Cl.³: **F 24 D 3/00**

(30) Priority: **26.04.83 GB 8311260**

(43) Date of publication of application:
**12.12.84 Bulletin 84/50**

(84) Designated Contracting States:
**BE DE FR GB LU NL**

(71) Applicant: **SA PATSCENTRE BENELUX NV**
**Zoning Industrial De Wauthier Braine 7 Avenue Reine Astrid**
**B-1430 Braine Le Chateau(BE)**

(72) Inventor: **Damhuis, Eduard c/o SA Patscentre Benelux N.V.**
**Z.I. de Wauthier Braine 7 av. Reine Astrid**
**B-1430 Braine le Chateau(BE)**

(74) Representative: **Crawford, Andrew Birkby et al,**
**A.A. THORNTON & CO. Northumberland House 303-306 High Holborn**
**London WC1V 7LE(GB)**

(54) **High efficiency boiler.**

(57) The thermal efficiency of a boiler is increased by actively causing condensation of water vapour in the flame gas and transferring the latent heat of condensation to water being fed to the boiler. A heat pump system incorporating an evaporator (32) and a condensor (30) is used to provide a controllable heat sink which causes the active condensation. The condensor (30) is preferably included in a heat exchanger (20) so that the water being fed to the boiler is heat by both the flame gases from the boiler and by the condensor.

EP 0 127 939 A2

Croydon Printing Company Ltd

- 1 -

HIGH EFFICIENCY BOILER

The present invention relates to boilers and more particularly to apparatus for improving the efficiency of a boiler.

In normal gas fired boilers the flue gasses leave at a temperature of around 200°C to secure a suitable draught and avoid condensation in the chimney. The maximum efficiency of such a boiler is around 80% UCV (Upper Calorific Value). In order to improve the efficiency, the flue gasses would need to be cooled to a temperature much lower than 200°C and maximum gain would be obtained if also the water vapour in the flue gasses would condense completely. The gain in efficiency by cooling the flue gasses from 55°C down to 25°C and thus condensing the water vapour in it is around 10%.

In the Netherlands new higher efficiency boilers have been developed using a heat exchanger in the flue gas stream connected to the return water of the heating circuit. The efficiency of these boilers is around 90% UCV and some condensation takes place. Forced ventilation is used for flue gas extraction. These boilers have two major disadvantages:

- The return water temperature varies from 20°C to 70°C. With rising return-water temperature the efficiency decreases, and at a return-water temperature over 55°C condensation will not take place. The gain in efficiency is therefore limited since at a flue gas temperature of 55°C the maximum efficiency is only 89% UCV.

- Due to this insufficient condensation in the boiler itself and the low flue gas temperature, condensation will occur in the chimney which is in most cases unacceptable.

The present invention provides a controllable heat sink for attachment to a normal non-condensing boiler.

In condensing mode of a preferred embodiment the flue gasses are routed over a heat exchanger which is cooled by the return-water of the heating circuit and then passed over an evaporator unit of a heat pump system. This evaporator is maintained at a temperature considerably below 30°C so that complete condensation occurs. The condensor unit of the heat pump is incorporated into the second heat exchanger.

In order that the present invention be more readily understood, an embodiment thereof will now be described by way of example with reference to the accompanying drawings, in which:-

Figure 1 shows diagrammatically a boiler installation according to the present invention;

Figure 2 shows an exploded perspective view of a part of the installation shown in Figure 1; and

Figure 3 shows a partly broken away perspective view of one part of the installation shown in Figure 1.

The present invention is applicable to all types and sizes of boiler but for convenience in the following description reference is made to a domestic gas fired boiler. It will be understood that the invention is not limited to the type of fuel used by the boiler or by the use to which the boiler is put. In other words, although in domestic boilers, water is heated for heating and washing purposes in a closed hoop, hence the use of the expression "return water", in industrial boilers for steam production the expression "return water" should be read as including feed water.

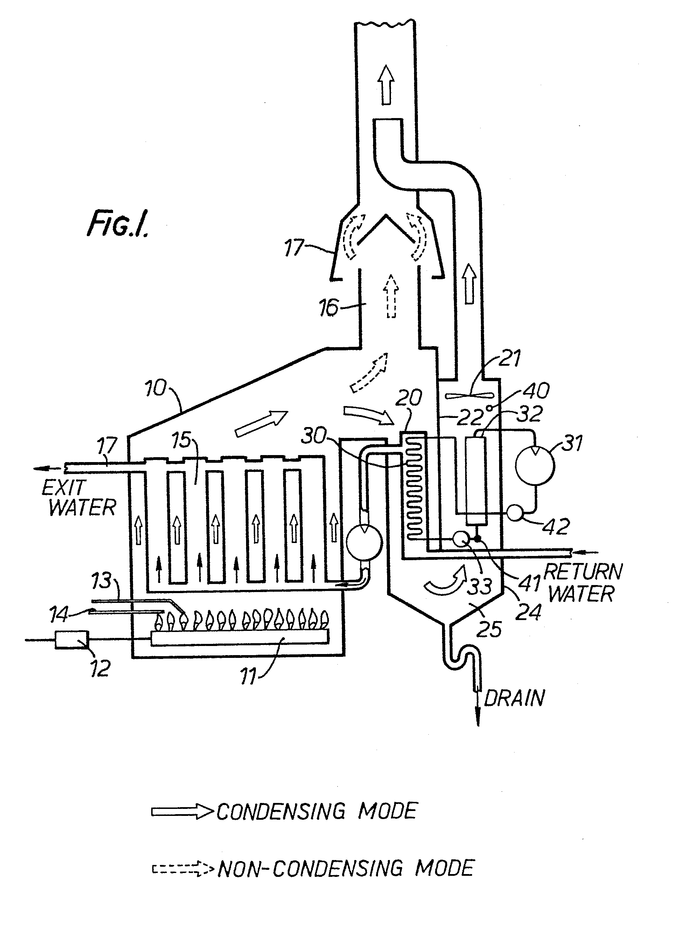

Turning now to Figure 1, a domestic gas fired boiler comprises a housing 10 containing a burner unit 11 provided with a gas valve 12, ignition electrode 13 and flame detector 14. A heat exchanger 15 is mounted above the burner unit 11 and water is circulated through the heat exchanger 15 by a circulation pump 16 in the usual way. Hot water leaves the heat exchanger 15 via an outlet 17 and the hot flue gasses resulting from the burner unit 11, partially cooled by passing through the heat exchanger 15, passes up a chimney 16 past a draught diverter 17 to atmosphere.

Thus for the boiler construction is basically conventional. In order to increase the thermal efficiency of the boiler it is proposed to extract more heat from the hot flue gasses leaving the heat exchanger 15 preferably by raising the return water temperature prior to supply to the heat exchanger 15 by the circulation pump 16. This is achieved by diverting gasses which would otherwise pass up the chimney and causing them to pass through a further heat exchanger 20 where return water is heated prior to being fed to the circulation pump 16.

The gasses which would otherwise pass up the chimney are diverted by means of a ventillator 21 which causes the gas to be drawn down through the heat exchanger 20, underneath on upright partition 22 and then up the other side of the partition 22 and wall 24 of the housing 10. Thereafter, the gases are fed into the chimney downstream of the draught diverter 17.

This arrangement causes water vapour in the gases to be condensed out by the heat exchanger 20 but only if the return water temperature is initially sufficiently low. Thus, with increasing return water temperature there is a reducing condensation effect. Any condensate is collected in a trough 25 and drained off.

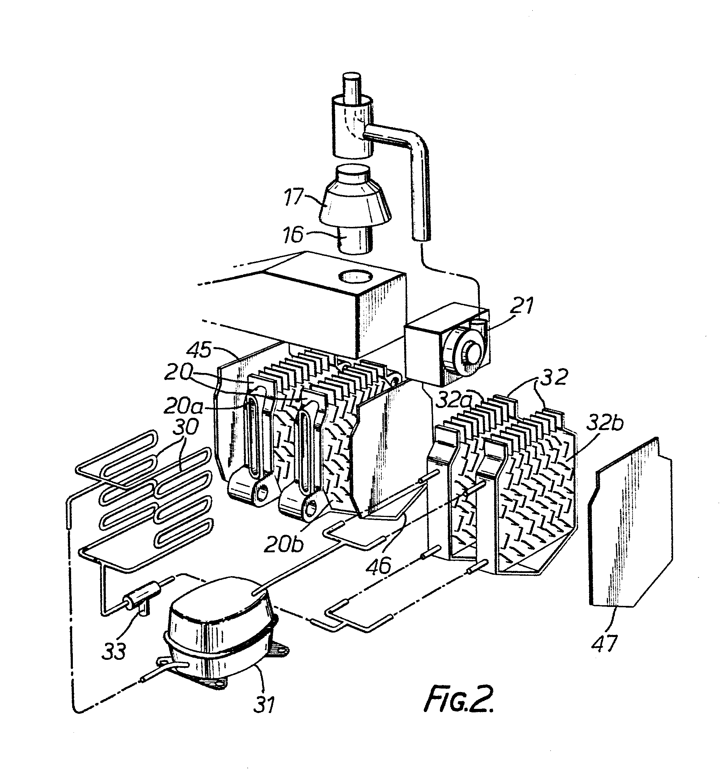

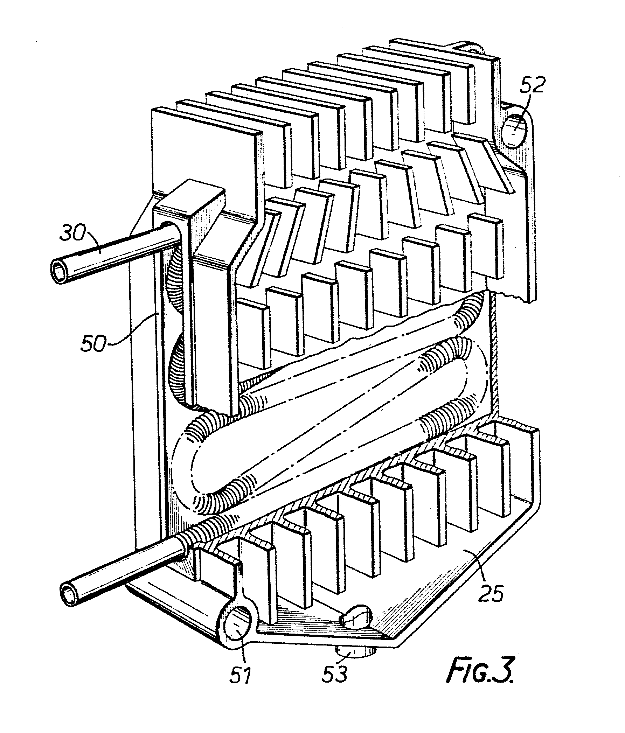

In order to ensure complete condensation under a wider range of return water temperatures, a controlled heat sink is provided whose temperature is much lower than the usual return water temperature. This is achieved by using a heat pump system in conjunction with the heat exchanger 20. The system comprises a condensor coil 30 located in the heat exchanger 20, a heat pump 31, an evaporator unit 32, and an expansion valve or capillary tube 33. The construction of the heat exchanger 20 and evaporator unit 32 is shown in more detail in Figures 2 and 3 and will be described later.

In operation, flue gases leave the first heat exchanger at a temperature of around 200°C and pass over the heat exchanger 20 which is cooled by the return water. The flue gases are cooled down to the return water temperature. If the return water temperature is below 55°C some condensation will take place. This is called passive condensation. The cooled down flue gases will then pass over the evaporator unit 32 of the heat pump system. The heat pump will maintain the temperature of the evaporator unit 32 at between 5 and 30°C. The flue gases will cool down to a temperature between 5 and 30°C which will result in complete condensation of the water vapour in the flue gases. This is called active condensation.

The heat extracted by the heat pump system from the evaporator unit 32 is transferred to the return water circuit in the condensor coil which is incorporated in the heat exchanger 20.

The load on the heat pump is directly related to the return water temperature and increases as the temperature rises.

With rising return water temperature the heat load on the evaporator increases and this results in an increased evaporator temperature.

The maximum evaporator temperature is set at 30°C and is reached at a return water temperature of circa 55°C.

At a return water temperature of 60°C or higher the heat pump is switched off and the boiler operates only in non-condensing mode since otherwise the pressure in the heat pump system would become too high.

The major features of this boiler concept are:

- complete condensation and therefore (i) no risk of condensation in the chimney and (ii) highest efficiency (close to 100% UCV).
- compact construction since the flue gas heat exchanger and condenser unit are combined.
- possibility to operate the system in two different modes:
  - (a) non-condensing (fan off) as normal optimised boiler
  - (b) condensing mode with highest efficiency (fan on).

The boiler installation is equipped with a microprocessor control (not shown) which ensures the safe operation of the gas valve 12 and burner unit 11. It controls the operating mode and ensures maximum efficiency of the boiler. It also incorporates an extended self-check facility and fault indicator in case of a failure. Sensors such as an air flow sensor 40, an evaporator temperature sensor 41 and a maximum evaporator fluid pressure switch 42 are provided in order to supply signals to the microprocessor control.

Figure 2 shows in more detail how the heat pump system could be implemented in practice. The same reference numerals as were used in Figure 1 are used in Figure 2 for the same parts and hence a detailed description of the system is not considered necessary.

It will be noted that the heat exchanger 20 comprises two identical units 20a and 20b arranged in parallel. The number and size of the units can be varied depending on the size and capacity of the boiler. Likewise, the evaporator unit 32 comprises two identical units 32a and 32b arranged in parallel. Again the size and number of evaporator units can be altered.

Plates 45,46 and 47 are provided with the plate 46 separating the heat exchanger 20 from the evaporator unit 32 and performing the function of the partition 22 in Figure 1. The plates are arranged to confine the gases in such a manner that they pass close to the heat exchanger and evaporator unit surfaces and the separator plate 46 may be provided with insulation material.

The construction of a unit for a possible heat exchanger 20 is shown in more detail in Figure 3. In this case each unit is a cored metal casting e.g. of aluminium the exterior of which is finned in order to present the maximum surface area to flue gases which are caused to flow over the exterior of the unit. A condensor coil 30 is inserted into the hollow core of the unit through an aperture 50 in one side wall of the unit and the aperture is then sealed. Two water connections 51 and 52 are provided to permit the return water to flow through the hollow core. The unit is thus integrated one with heat transfer between the coil 30 and return water and between flue gases and the return water. The collection tray 25 is cast into the unit and condensate leaves the unit via an outlet 53.

The heat exchanger unit need not necessarily be of the specific form as herein described. Any fabricated or cast body whose exterior contains extended surfaces, not necessarily in the form of fins, in order to increase its surface area for contact with the gas could be used.

The evaporator unit 32 may consist of a casting with the evaporator coil cast into it, or of one or more coils directly placed in the flue gas stream. It is also convenient to use a finned tube for either of or both the condensor and evaporator coils.

CLAIMS:

1.      A method of operating a boiler comprising burning fuel to heat gas, transferring heat from the gas to a fluid in a first heat exchange process, and causing the gas to pass through a further heat exchange process whereby to cause condensation of water vapour in the gas and pass the latent heat of condensation to the fluid characterised in that the further heat exchange process includes controlling a heat sink to be at a temperature substantially below the initial temperature of the fluid whereby to actively cause condensation of water vapour substantially independent of the initial temperature of the fluid.

2.      A method according to claim 1, wherein the step of controlling the heat sink includes the steps of evaporating and compressing a fluid medium in a heat pump cycle.

3.      A method according to claim 2, wherein heat is simultaneously transferred to the fluid from both the gas and a condensor coil of a heat pump.

4.      A method according to claim 1,2 or 3 wherein the gas is diverted from its natural flow path by means of a ventilator during the further heat exchange process.

5.      Boiler apparatus comprising a burner (11) for burning fuel to heat gas, a first heat exchanger (15) for transferring heat from the gas to a fluid, and a further heat exchanger (20) for transferring latent heat of condensation to the fluid, characterised in that the further heat exchanger (20) is part of a heat pump system (30,31,32,33) which controls the temperature of the heat pump cycle to be at a temperature substantially below the initial temperature of the fluid whereby to cause condensation of water vapour substantially independent of the initial temperature of the fluid.

6. Boiler apparatus according to claim 5, and comprising a ventilator (21) for diverting the flow of gas from its natural path through the heat pump system (30,31,32).

7. Boiler apparatus according to claim 5 or 6, wherein a condensor coil (30) of the heat pump system is provided in the heat exchanger (20) to form an integrated assembly.

8. Boiler apparatus according to claim 7, wherein the heat exchanger (20) comprises a fabricated or cast body the exterior of which contains extended surfaces in the form of fins or rods to increase its surface area for contact with the gas.

9. Boiler apparatus according to claim 8, wherein a condensate collection tray (25) is an integral part of the body of the heat exchanger (20).

10. Boiler apparatus according to claim 8 or 9, wherein the heat exchanger (20) comprises a plurality of units connected together in parallel.

11. A heat exchanger comprising a hollow body whose exterior is arranged to be in contact with a first fluid medium and whose interior is arranged to receive a second fluid medium together with means for permitting a further fluid medium to circulate in the interior of the body whereby to cause heat transfer between the first, second and further fluid mediums.

- 10 -

12.    A heat exchanger according to claim 11, wherein said circulation permitting means comprises a coiled conduit (30) through which said further fluid medium is arranged to flow.

13.    A heat exchanger according to claim 12, wherein the coiled conduit is provided with an extended surface.

*Fig.I.*

EXIT WATER

RETURN WATER

DRAIN

17 16 10 15 30 20 21 40 22° 32 31 42 33 41 24 25 13 14 12 11

⟹ CONDENSING MODE

⊏⁻⁻⁻⁻⁼⊐▷ NON-CONDENSING MODE

*FIG.2.*

0127939

FIG.3.